# EUROPEAN PATENT SPECIFICATION

(11) **EP 3 190 602 B1**
(45) Date of publication and mention of the grant of the patent: **16.10.2019**
(21) Application number: 15837592.3
(22) Date of filing: 24.07.2015
(51) Int. Cl.: H01H 47/00, H01H 47/10, F02D 41/20, H01F 7/18, H02M 7/42, H02J 3/38

(54) **ELECTROMAGNETIC CONTACTOR AND POWER CONDITIONER**
ELEKTROMAGNETISCHER SCHÜTZ UND POWER CONDITIONER
CONTACTEUR ÉLECTROMAGNÉTIQUE ET CONDITIONNEUR DE PUISSANCE

(30) Priority: 03.09.2014 JP 2014178677
(43) Date of publication of application: 12.07.2017
(73) Proprietor: Hitachi Industrial Equipment Systems Co., Ltd., Tokyo 101-0022 (JP)
(72) Inventor: YAMAGUCHI Hidemasa, Tokyo 101-0022 (JP); YAMAMOTO Toshihiko, Tokyo 101-0022 (JP)
(74) Representative: Strehl Schübel-Hopf & Partner
(86) International application number: PCT/JP2015/071053
(87) International publication number: WO 2016/035474

(56) References cited:
- EP-A2- 2 768 132
- WO-A1-2014/050060
- CN-Y- 201 256 127
- JP-A- H1 066 349
- JP-A- S5 730 226
- JP-A- 2013 085 411
- JP-U- H 075 240
- JP-U- H0 397 847
- JP-U- H0 515 279
- US-A- 5 631 801

## Description

### TECHNICAL FIELD

The present invention relates to an electromagnetic contactor and a power conditioner.

### BACKGROUND ART

As a device, such as a solar power conditioner, which needs energization and disconnection of a circuit, a constant excitation type electromagnetic contactor is often used. In the constant excitation type electromagnetic contactor, applying a voltage to an electromagnetic coil closes a path in a circuit, and interrupting the applied voltage opens the path in the circuit. Applying the voltage to the electromagnetic coil allows the path in the circuit to be opened/closed. At this time, the electromagnetic contactor is controlled by using an electromagnet having a single power source and capable of closing a path and maintaining the closed path state, or by a method in which an electromagnetic coil for closing a path and an electromagnetic coil for maintaining the closed path state are separately provided.

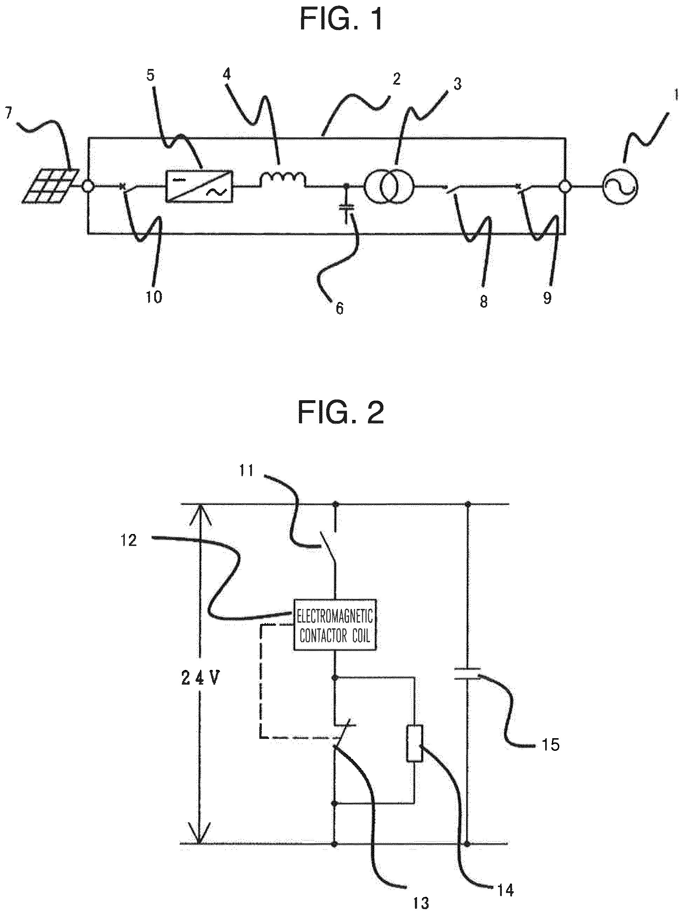

For example, in a solar power conditioner, its operation is started when an amount of solar insolation increases, and the operation is automatically stopped when the solar insolation is not sufficient. Fig. 1 shows a configuration of a common power conditioner. The power conditioner is disposed between a solar panel 7 and a system power source 1, and as shown in Fig. 1, the power conditioner includes an inverter 5, a filter 4, 6, a control circuit, a booster circuit including a transformer 3, a switch 9 and an electromagnetic contactor 8. A voltage output from the solar panel 7 is converted into an alternating current containing a harmonic voltage by the inverter 5, and the harmonic component is filtered out by a filter circuit including an alternating current reactor 4 and a filter capacitor 6, and then the alternating current is converted into an alternating current having the same voltage as that of the system 1 by the transformer 3. The power conditioner 2 outputs the same voltage as that of the system 1, allowing electric power selling. The output power of the solar panel increases and decreases depending on the amount of solar insolation, and during night-time, the solar panel does not output. When the output power of the solar panel decreases, a voltage applied to an electromagnetic coil of the electromagnetic contactor 8 is interrupted to open a path, and the inverter is disconnected from the system to stop the operation.

### CITATION LIST

PATENT LITERATURE 1: JP-A-2006-318661
PATENT LITERATURE 2: JP-A-10-275549

### SUMMARY OF THE INVENTION

### TECHNICAL PROBLEM

In an electromagnetic contactor, an electromagnet gap is wide in the open path state and a magnetic resistance is high, so that a large amount of magnetomotive force is needed at the start of path-closing. The gap becomes narrow in the closed path state and a weak magnetomotive force can maintain the closed path state. However, because a common electromagnetic contactor operates at full voltage application and a current flowing in an electromagnetic coil cannot be controlled, a power source having a capacity needed for energizing the electromagnetic contactor is necessary. Therefore, the control power source is made large, leading to a problem of increase in cost.

As a method for miniaturizing a control power source, PATENT LITERATURE 1 (JP-A-2006-318661) and PATENT LITERATURE 2 (JP-A-10-275549) respectively disclose a method in which after energization, a resistor is inserted in an electromagnetic coil and an electromagnetic contactor is closed, and subsequently a voltage applied to the electromagnetic coil is lowered, and a method in which the voltage is not changed, but the electromagnetic coil is divided into two parts and a parallel connection is switched to a series connection, so that the voltage applied to one part of the electromagnetic coil is lowered. In the former, heat loss by the resistor inserted immediately after the energization is uneconomic and problematic.
Further, the resistor has to be inserted while maintaining the power source. In the latter, to divide the electromagnetic coil, a complex control circuit is needed, which increases cost.

Also, in a solar power conditioner, even at a temporary blackout of the alternating current, its operation has to continue, and even during an unstable state of the control power source, the electromagnetic contactor has to maintain the energized state. But, in the methods described in PATENT LITERATURE 1(JP-A-2006-318661) and PATENT LITERATURE 2 (JP-A-10-275549), if the control power source becomes unstable, the energized state cannot be maintained and the electromagnetic contactor is opened, so that the solar power conditioner stops running.
Other prior art examples for controlling the supply of solar-based DC power to an AC power system can be found in CN 201 256 127 Y, JP H10 66349 A, and EP 2 768 132 A2. US 5 631 801 A describes a fast relay control circuit with reduced bounce and low power consumption.

### SOLUTION TO PROBLEM

The present invention provides a power conditioner as defined in claim 1.

### ADVANTAGEOUS EFFECTS OF INVENTION

According to the present invention, a control power source can be miniaturized and an economical electromagnetic contactor and power conditioner having a small loss can be provided.

### BRIEF DESCRIPTION OF DRAWINGS

Fig. 1 is a configuration diagram of a power conditioner.
Fig. 2 is an illustration diagram of an example useful to understand the present invention.
Fig. 3 is an illustration diagram showing change in current and voltage at the time of energizing an electromagnetic contactor according to the present invention.
Fig. 4 is an illustration diagram of an embodiment according to the present invention.

### DESCRIPTION OF EXAMPLES AND EMBODIMENTS

### EXAMPLE

An example useful to understand the present invention will be described with reference to the figures.

Fig. 2 shows an example useful to understand the invention. In this example, a control power source uses a direct current of 24 V, and an energization switch 11, an electromagnetic coil 12 for energizing an electromagnetic contactor, an auxiliary contact point 13 of the electromagnetic contactor, a current-limiting resistor 14 and a capacitor 15 for backing up the control power source are included.

By closing the energization switch 11 at the time of energization, a voltage is applied to the electromagnetic coil 12 and the electromagnetic contactor is energized. At the time of the voltage application, the current-limiting resistor 14 and the auxiliary contact point 13 of the electromagnetic contactor are brought into the parallel state with each other, and because a combined impedance is small, most of the voltage is applied to the electromagnetic coil 12 and the electromagnetic contactor is brought into the energized state. The auxiliary contact point 13 of the electromagnetic contactor is also opened in synchronization with the electromagnetic contactor. The applied voltage is divided by the electromagnetic coil and the current-limiting resistor and the voltage applied to the electromagnetic coil lowers to a voltage value at which the energized state is maintained. Because only the current-limiting resistor is inserted, a current flowing in the circuit is limited, thus reducing power consumption.

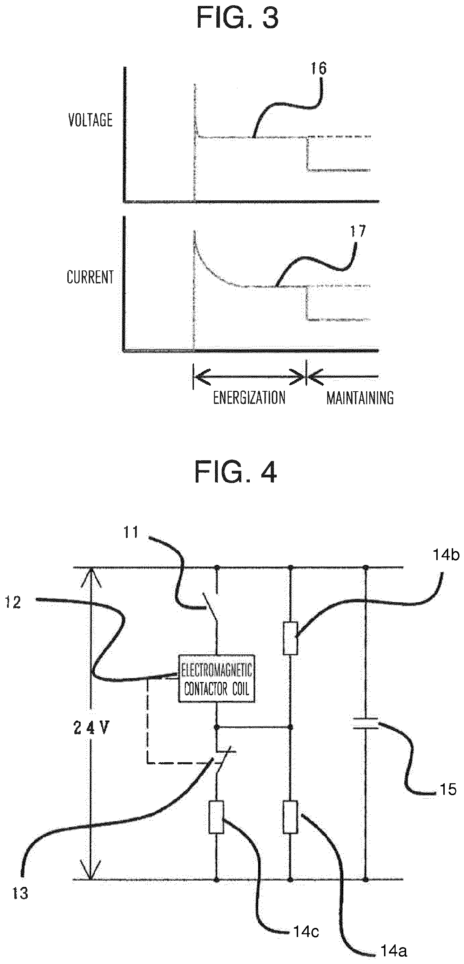

Fig. 3 shows change in voltage and current at the time of the energization. At the time of the energization, a high voltage and current are maintained. After the energization, due to the resistor insertion, the voltage and the current lower. If the resistor is not inserted, the high voltage and current are maintained as shown by the dotted lines. Also because of the capacitor for backing up the power source, drop of the control voltage is not observed even in an initial stage of the energization and when the system voltage lowers.

Such an energization circuit for an electromagnetic contactor is applied to a solar power conditioner, thereby a highly-efficient power conditioner having a reduced cost can be provided. In the solar power conditioner, further, there is a protection maintaining time period of several seconds after the path-opening and energization operation cannot be performed, so that a continuous energization and release do not be carried out, allowing the temperature of an insertion resistor to be prevented from rising.

### EMBODIMENT

An embodiment of the present invention will be described with reference to the figure. Fig. 4 shows the embodiment.

Fig. 4 differs from Fig. 2 in that a first resistor 14a connected in series with a coil 12 of an electromagnetic contactor, a second resistor 14b connected in series and a third resistor 14c connected in parallel with the first resistor 14a are provided. The circuit is configured so that a direct current of 24 V from a control power source is divided by the resistors 14a-c, and at the time of energization, a voltage is applied to the electromagnetic coil 12. After energizing the electromagnetic contactor, the inserted resistor is disconnected to change a division rate, thus reducing the voltage applied to the electromagnetic coil 12. By using such a circuit, raising the voltage applied to the electromagnetic coil 12 only at the time of energization, similar to the example, and lowering the applied voltage during maintaining, an economical energization circuit can be provided.

### REFERENCE SIGNS LIST

- 1: system
- 2: power conditioner
- 3: transformer
- 4: alternating current reactor
- 5: inverter
- 6: filter capacitor
- 7: solar panel
- 8: electromagnetic contactor
- 9: alternating current switch
- 10: direct current switch
- 11: energization switch
- 12: electromagnetic coil
- 13: electromagnetic contactor, auxiliary contact point
- 14,14a-c: current-limiting resistors
- 15: capacitor for backing up power source
- 16: voltage
- 17: current

## Claims

1. A power conditioner (2) comprising:
a power conversion device (3);
an electromagnetic contactor (8, 13) connecting an alternating current power source (1) to the power conversion device (3);
a first resistor (14a) connected in series with a coil (12) of the electromagnetic contactor (8, 13);
a second resistor (14b) connected in series and a third resistor (14c) connected in parallel with the first resistor (14a);
an energization switch (11) connected in series with the electromagnetic contactor (8, 13);
a switch (13) connected in parallel with the first resistor (14a); and
a capacitor (15) connected in parallel with the coil (12) of the electromagnetic contactor (8, 13) and the energization switch (11).

2. The power conditioner (2) according to claim 1, **characterized in that** the capacitor (15) is configured to back up the power source (1).

3. The power conditioner (2) according to claim 1, **characterized in that** the energization switch (11) is configured to be switched before or after energizing the electromagnetic contactor (8, 13).

## Patentansprüche

1. Power Conditioner (2) mit
einer Leistungswandlungsvorrichtung (3),
einem elektromagnetischen Schütz (8, 13), das eine Wechselstrom-Leistungsquelle (1) an die Leistungswandlungsvorrichtung (3) anschließt,
einem ersten Widerstand (14a), der in Serie mit einer Spule (12) des elektromagnetischen Schützes (8, 13) angeschlossen ist,
einem zweiten in Serie angeschlossenen Widerstand (14b) und einem dritten Widerstand (14c), der parallel zu dem ersten Widerstand (14a) angeschlossen ist,
einem Energieversorgungsschalter (11), der in Serie mit dem elektromagnetischen Schütz (8, 13) angeschlossen ist,
einem Schalter (13), der parallel zu dem ersten Widerstand (14a) angeschlossen ist, und
einem Kondensator (15), der parallel zu der Spule (12) des elektromagnetischen Schützes (8, 13) und dem Energieversorgungsschalter (11) angeschlossen ist.

2. Power Conditioner (2) nach Anspruch 1, **dadurch gekennzeichnet, dass** der Kondensator (15) als Backup für die Leistungsquelle (1) konfiguriert ist.

3. Power Conditioner (2) nach Anspruch 1, **dadurch gekennzeichnet, dass** der Anregungsschalter (11) dazu konfiguriert ist, angeschlossen zu werden, bevor oder nachdem das elektromagnetische Schütz (8, 13) mit Energie versorgt wird.

## Revendications

1. Conditionneur d'énergie (2) comprenant :
un dispositif de conversion d'énergie (3) ;
un contacteur électromagnétique (8, 13) connectant une source d'énergie (1) en courant alternatif au dispositif de conversion d'énergie (3) ;
une première résistance (14a) connectée en série avec une bobine (12) du contacteur électromagnétique (8, 13) ;
une deuxième résistance (14b) connectée en série et une troisième résistance (14c) connectées en parallèle avec la première résistance (14a) ;
un commutateur de mise sous tension (11) connecté en série avec le contacteur électromagnétique (8, 13) ;
un commutateur (13) connecté en parallèle avec la première résistance (14a) ; et
un condensateur (15) connecté en parallèle avec la bobine (12) du contacteur électromagnétique (8, 13) et le commutateur de mise sous tension (11).

2. Conditionneur d'énergie (2) selon la revendication 1, **caractérisé en ce que** le condensateur (15) est configuré pour servir en secours de la source d'énergie (1).

3. Conditionneur d'énergie (2) selon la revendication 1, **caractérisé en ce que** le commutateur de mise sous tension (11) est configuré pour être commuté avant ou après la mise sous tension du contacteur électromagnétique (8, 13).
